# EUROPÄISCHE PATENTSCHRIFT

(11) **EP 1 059 396 B1**
(45) Veröffentlichungstag und Bekanntmachung des Hinweises auf die Patenterteilung: **07.11.2001**
(21) Anmeldenummer: 00101767.2
(22) Anmeldetag: 28.01.2000
(51) Int. Cl.: E04D 11/00, A01G 9/00

(54) **Dach-, Fassaden- und Mauerbegrünung**
Greening of roofs, façades and walls
Engazonnement de toits, façades et murs

(30) Priorität: 26.05.1999 DE 29909177 U; 01.12.1999 DE 29921109 U
(43) Veröffentlichungstag der Anmeldung: 13.12.2000
(73) Patentinhaber: Pink, Elisabeth, 56736 Kottenheim (DE); Pink, Peter, 56736 Kottenheim (DE); Pink, Paul, 56736 Kottenheim (DE)
(72) Erfinder: Pink, Hans, (DE)
(74) Vertreter: Hentschel, Peter, Dipl.-Ing.

(56) Entgegenhaltungen:
- EP-A- 0 267 367
- EP-A- 0 310 760
- WO-A-93/22506
- AT-B- 398 357
- DE-A- 4 328 787
- DE-A- 19 651 211
- DE-A- 19 744 553
- DE-U- 29 508 317

## Beschreibung

Die Erfindung betrifft ein Bauelement zur Erstellung begrünter Wand- und Dachflächen bestehend aus einer Wand- oder Dachplatte aus einer nachgiebigen Substrat-Füllung, die aus Stein- und/oder Glaswolle, Torf-Erde-Gemisch und einem Bindemittel besteht, sowie aus einer Armierung in Form einer gitterartigen Grundstruktur gebildet ist und deren Sichtfläche begrünbar oder begrünt ist sowie eine Schallschutzwand oder einem Wand- oder Dachabschnitt aus solchen Bauelementen gebildet, wie in den Ansprüchen ausgeführt.

Die Ausgestaltung einer Außenwand- oder Dachplatte zur Fassaden- und Mauerbegrünung und deren Vorteile sind bereits eingehend in dem deutschen Gebrauchsmuster DE-U-299 09 177.5 beschrieben.

Auch die vorliegende Erfindung verwendet eine Platte wie sie in allen Einzelheiten in der vorgenannten Druckschrift beschrieben ist sowie auch die darin erläuterte konstruktive Ausgestaltung von Wand- und Dachabschnitten sowie von Schallschutzwänden unter Verwendung derartiger Platten.

DE-A-197 44 553 beschreibt einem Formkörper mit eingebehesen Netzen, wo statische Belasdungen aufgenommen werden können.

Aufgabe der Erfindung ist es, unter Beibehaltung der Zusammensetzung des verwendeten Materials für die begrünten oder begrünbaren Platten das Bauelement der eingangs genannten Art noch robuster und widerstandsfähiger zu gestalten, derart, daß es auch problemlos transportierbar und rauhestem Baubetrieb widersteht und eine einfach zu handhabende Verkaufseinheit bildet. Desweiteren soll sich das Bauelement in seinen Eigenschaften nicht von dem aus der vorgenannten Gebrauchsmusterschrift unterscheiden und sich auch zur Erstellung von begrünten Dächern und begrünten Wänden sowie freistehenden Schallschutzwänden jeweils in der gleichen, beschriebenen Kontruktionweise eignen.

Diese Aufgabe wird erfindungsgemäß dadurch gelöst, daß die eingangs erwähnte Wand- oder Dachplatte in einer Schale oder einem Kasten aufgenommen ist, die bzw. der die Wand- oder Dachplatte rückseitig und wandseitig einfaßt.

Die Schale oder der Kasten stützt die bepflanzte oder bepflanzbare Wand- oder Dachplatte rückseitig und seitlich ab. Damit das Substrat mit den Pflanzen oder Pflanzensamen nicht herausfallen kann, ist dieses durch ein auf oder in dem Substrat eingebettetes Stützgewebe gehalten. Die Pflanzenwurzeln können sich an diesem Stützgewebe (= Armierung) verankern und so den Zusammenhalt der Substrat-Füllung und der Schale fördern.

Auf diese Weise wird eine stabile und handhabbare Einheit in Form eines Bauelementes geschaffen, das robust genug ist, um auch stärkster Beanspruchung, wie sie beispielsweise auf Baustellen, Verkaufsstellen oder auch während des Transportes herrschen, unbeschadet zu überstehen.

Aufgrund der vorteilhaften, erfindungsgemäßen Anordnung der bepflanzten Platte in einem Gehäuse oder einer Schale kann kein Plattenmaterial (Substrat-Füllung) verloren gehen oder versehentlich abgebrochen werden. Nicht zuletzt bietet das Gehäuse der Schale auch den Pflanzen Schutz gegen Beschädigungen, so daß das erfindungsgemäße Bauelement problemlos bereits begrünt verkauft, transportiert und montiert werden kann. Die erfindungsgemäße Anordnung hat darüber hinaus den Vorteil, daß eine mit den erfindungsgemäßen Bauelementen gebildete Wand- oder Dachverkleidung eine lange Lebensdauer und Standzeit aufweist. Sollten tatsächlich einmal Defekte irgendeiner Art auftreten, lassen sich die einzelnen Bauelemente auch bei starkem Überwuchs in den Randbereichen leicht unabhängig voneinander mühelos herauslösen.

Zweckmäßigerweise ist die Schale des erfindungsgemäßen Bauelementes aus einem Material gebildet, das leicht von Gewicht sowie widerstandsfähig gegen Stoß und Schlag ist. Hierzu bietet sich in vorteilhafter Weise Leichtmetall wie Aluminium oder Kunststoff an. Das Metall oder der Kunststoff kann aus Gründen von Gewichts- und Materialersparnis dünnwandig ausgebildet sein. Die erforderliche Formstabilität erhält die Schale durch Umbiegungen im Randbereich nach außen und unten, also durch Umbiegung des Randbereiches um ca. 360°.

In weiterer vorteilhafter Ausgestaltung der Erfindung ist die Armierung, die zur Verankerung der Bepflanzung dient, mit der Schale beispielsweise durch Verschweißen mit dem Schalenrand oder durch Einlassen in das Kunstoff-Material der Schale fest verbunden. Hierdurch wird ein sicherer Zusammenhalt zwischen Schale und Füllung des erfindungsgemäßen Bauelementes auch bei hohen Winddrücken erzielt, so daß dieses auch in aufrecht stehender Position problemlos z.B. zur Wandbegrünung, einsetzbar ist und auch dann ein Herausfallen der Füllung nicht zur befürchten ist.- Aber auch die Bepflanzung, die bevorzugt aus Sempervivum Hybriden besteht, sorgt aufgrund ihrer guten Verwurzelung in Kombination mit der Verankerung für einen sicheren Zusammenhalt.

Die erfindungsgemäße Armierung kann aber auch mit einfachsten Mitteln von Hand hergestellt werden: Sie kann aus einem separaten, ebenen Gitter aus nichtrostendem Material, vorzugsweise Zinkdraht, bestehen, das mit Drahtschlaufen, die von Hand durch Bilden einer Schlaufe durch die Entwässerungslöcher im Boden der Schale hindurch verankerbar ist. Die freien Enden der Drahtschlaufen werden dann nach Anordnen des Armierungsgitters in der richtigen Höhe durch Verknüpfen oberhalb des Armierungsgitters befestigt, das über oder innerhalb der Substratfüllung angeordnet ist. Soll die Armierung innerhalb der Substratfüllung angeordnet werden, werden zusätzlich noch 2 bis 3 cm Substratfüllung aufgebracht.

Damit die Substratfüllung in der Schale und die Pflanzenwurzeln gut belüftet werden und überschüssiges Wasser ablaufen kann, sind in den Seitenwänden der Schale Wasserablaufschlitze vorgesehen, die sich bis in den Bodenbereich der Schale fortsetzen. Darüber hinaus können zusätzlich noch im Boden der Schale Wasserablauflöcher eingelassen sein. Auf diese Weise wird sichergestellt, daß aus dem erfindungsgemäßen Bauelement unabhängig von der Position, die es nach der Montage einnimmt, in allen Bereichen gleich gut überschüssiges Wasser abgeführt wird und auch die Pflanzenwurzeln überall gleich gut belüftet werden.

Das verwendete Bindemittel für die Substratfüllung ist bevorzugt ein Leim-Mehl-Gemisch. Dabei hat das gebundene Material vorzugsweise einen pH-Wert von 6 bis 7,5, um so ein optimales Wachstum der Begrünung sicherzustellen.

Das erfindungsgemäß gestaltete Bauelement sollte nicht zu dick sein, da sonst sein Gewicht zu groß und seine Handhabung eingeschränkt wird. Es hat sich eine Dicke von ca. 6 - 10 mm als vorteilhaft erwiesen. Vorzugsweise ist jedoch eine Dicke von 6 cm vorgesehen. Diese ist groß genug, um der Bepflanzung ausreichend Halt und Nahrung zu geben. Als Format für das erfindungsgemäße Bauelement hat sich eine Größe von ca. 30 x 60 cm als besonders vorteilhaft für die Handhabung und Montage erwiesen. Es können aber auch Elemente im Format von 60 x 60 cm oder auch andere Formate vorteilhaft eingesetzt werden.

Wie schon eingangs erwähnt, bezieht sich die Erfindung nicht nur auf das vorstehend erläuterte Bauelement, sondern auch auf eine mit den erfindungsgemäßen Bauelementen begrünten Dach- oder Wandabschnitt.

Da die erfindungsgemäßen Bauelemente bereits selbsttragend konstruiert sind, sind keine zusätzlichen Distanzstücke zur Unterstützung derselben erforderlich.

An der Wand- oder der geneigten Dachfläche sind erfindungsgemäß Halteprofile und/oder sonstige Halteeinrichtungen - vorzugsweise aus Aluminum - angebracht, zwischen denen die erfindungsgemäßen Bauelemente eingesetzt und in Position gehalten sind.

Die Distanzstücke, die vorzugsweise unter der Befestigung für die Halteeinrichtungen anbringbar sind, verhindern, daß die Bauelemente dicht an der Wand- oder der geneigten Dachfläche anliegen und sorgen so für die erforderliche Hinterlüftung sowie eine verbesserte Schall- und Wärmeisolierung. Vor allem verhindern sie, daß Feuchtigkeit an die Wand- oder Dachfläche herangetragen wird. Bevorzugt sind Mindestabstände von etwa 2 cm zur Dachfläche und etwa 5 cm zur Wandfläche.

Bevorzugt sind jedoch vertikale oder sich in der Fall-Linie erstreckende und von der tragenden Fläche abstehende Stege vorgesehen, die auch aus T-Profilen gebildet sein können. Die Bauelemente sind in die Zwischenräume zwischen den Stegen eingesetzt und dort mit ihren Schmalseiten übereinander gestapelt und stützen sich jeweils auf Winkeln oder Winkelprofilen ab, die auf den wand- bzw. dachseitig anliegenden Flanschen der T-Profile in der entsprechenden Höhe jeweils paarweise einander gegenüberliegend, angebracht sind.

Die Stege der T-Profile stehen über die Sichtflächen der Bauelemente ein wenig über und tragen dort Querbohrungen, in die Stifte oder Splinte eingesetzt sind. Es ist aber auch bevorzugt möglich, hutartige, zu den wandfernen Enden der Stege komplementäre Stücke oder durchgehende Profile über die freien Enden der Stege überzustülpen und mittels der Stifte oder Splinte zu befestigen. Die seitlichen Flansche der hutartigen Stücke oder Profile liegen dann beiderseits einer Sichtfläche eines Bauelementes auf dieser auf und tragen so zu einer weiteren Verbesserung des Haltes des jeweiligen Bauelementes und der Gesamtkonstruktion bei.

An den wandseitigen Enden der Stege oder der Schenkel des T-Profils sind seitlich abstehende Flansche angeordnet, die von Schrauben durchsetzt sind, die in Dübel in der Wand oder in Dachlatten einschraubbar sind.

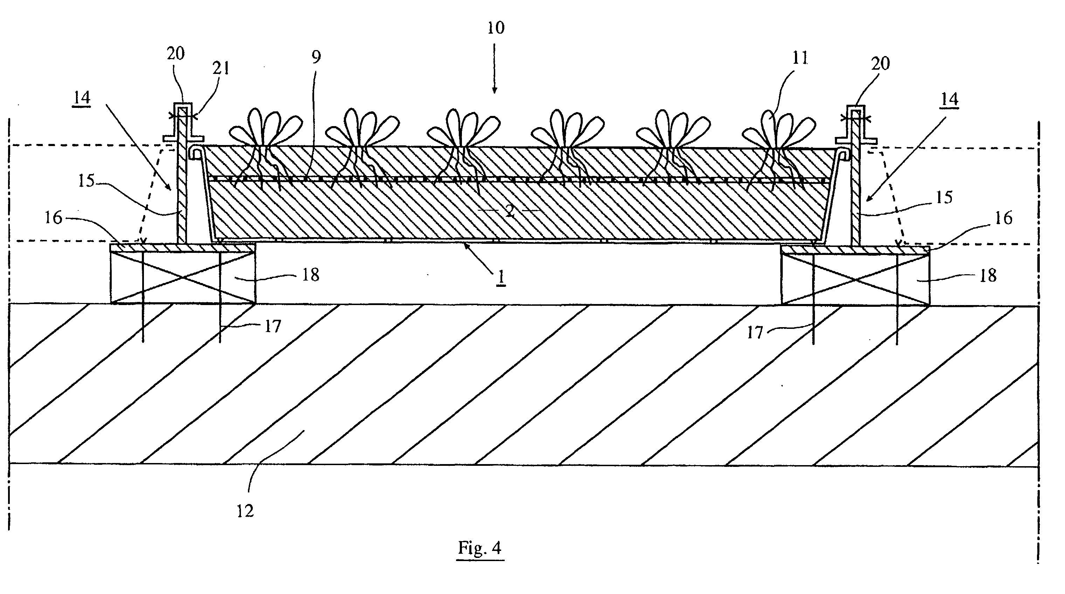

Die Distanzstücke können Klötze o.dgl. sein, die einfach auf die tragende Wand oder mittels Dübeln aufgeschraubt sind, wobei vorteilhafterweise ihre Befestigung mit denen für die T-Profile zusammenfallen kann (Fig. 4).

In weiterer vorteilhafter Ausgestaltung der Erfindung ist vorgesehen, daß zur Befestigung der die Bauelemente tragenden T-Profile bei Dachformen mit stärkerer Neigung wie z.B. bei Satteldächern, die sich firstseitig treffenden Profilstäbe miteinandenr - bspw. über Verbindungslaschen und Verschraubungen - verbunden sind.

Die Profilstäbe sind darüber hinaus auch an ihren unteren Enden, oberhalb der Traufe, über Verbindungslaschen und Verschraubungen fest mit einem umlaufend angeordneten Randeinfassungsprofil, wie es in dem Gebrauchsmuster DE-U-298 13 906.5 bereits beschrieben ist, fixierbar.

Selbstverständlich können die T-Profile auf den geneigten Dachflächen zusätzlich auch durch Querstege ausgesteift sein, wie dies auch bei Wandverkleidungen von Vorteil sein kann. Zusätzlich können auch die Profilstäbe mit Schrauben auf den Dachlatten befestigt sein.

Zur Verkleidung senkrechter Wandflächen sind die wandnahen Enden der Stege der Profilstäbe bzw. die seitlich abstehenden Profilflansche von Schrauben durchsetzt und in der Wand angeordnete Dübel eingeschraubt.

Die erfindungsgemäßen Bauelemente eignen sich in besonders vorteilhafter Weise auch zur Begrünung von Flachdächern, wie bspw. von Garagen oder Dächern mit nur geringem Gefälle. Bei einer Anordnung auf derartigen Dächern kann eine Tragkonstruktion vollständig entfallen. Zur Abdichtung genügt die Anordnung einer wurzelfesten, wasserdichten Folie auf der Dachoberfläche. Auch braucht kein Abstand zur Dachhaut zwecks Entwässerung und/oder Belüftung freigelassen werden, so daß Distanzstücke nicht erforderlich sind. Trotzdem ermöglichen die erfindungsgemäßen Bauelemente aufgrund ihrer konischen Form und ihres umlaufenden, überstehenden Randes eine problemlose Entwässerung. Bei Aneinandersetzen der Bauelemente bleiben im unteren Bereich der Elemente Hohlräume frei, die untereinander nach Art eines Drainagesystems verbunden sind und die bewirken, daß das Regenwasser schnell zum Dacheinlauf gelangen und abfließen kann. Ein Verstopfen dieses so gebildeten Entwässerungssystems ist nicht so schnell zu erwarten, als wenn das Flachdach mit Kies oder anderen Materialien überdeckt ist.

Zusätzlich kann bei der erfindungsgemäßen Anordnung auch ein saugfähiges Vlies aus nicht verrottendem Material unter den erfindungsgemäßen Bauelementen mit der Begrünung auf dem Flachdach angeordnet sein. Dieses bewirkt, daß das Regenwasser zunächst aufgesaugt und so zurückgehalten wird und erst nach und nach abfließt, was dazu beiträgt, daß es bei heftigen Regenfällen nicht zur Überlastung der Kanalisation und zur Überschwemmung kommt. Das erfindungsgemäße System kann also auch wasserrückhaltend ausgebildet sein.

Ein weiterer, besonderer Vorteil der Erfindung besteht darin, daß bei Defekten, z.B. an der Dachhaut oder am Bewuchs eines erfindungsgemäßen Bauelementes, die erfindungsgemäßen Bauelemente beliebig und mühelos entfernbar sind, auch wenn die Begrünung die Ränder der Platten derart überwuchert hat, daß einzelne Bauelemente nicht mehr auszumachen sind.

Mit den begrünten, erfindungsgemäßen Bauelementen können in vorteilhafter Weise durch entsprechende Anordnung auch Bilder in Mosaikform produziert werden.

Auf dem Garagen- oder Flachdach schützen bepflanzte Schalen die Dachhaut vor Verwitterung. Somit werden Pflegekosten eingespart. Bei Flachdächern ergibt sich eine längere Haltbarkeit des Daches, da die erfindungsgemäße Begrünung gegen Lichteinfall schützt und damit auch gegen die zu schnelle Alterung der Dachhaut. Die einzelnen Bauelemente mit den Pflanzen können zum Zwecke von Reparaturen auch bei großflächigen Dächern beliebig entfernt werden. Es kann aber auch eine Dachbegrünung jeden Steigungsgrades erfolgen. Bei dem erfindungsgemäßen Bauelement handelt es ich um eine transportable Verkaufseinheit, die robust zu handhaben ist.

Die erfindungsgemäß begrünten Bauelemente eignen sich in vorteilhafter Weise auch zur Erstellung freistehender Schallschutzwände. Die Bauelemente werden auf einer Tragkonstruktion, vorzugsweise aus Alu-Profilschienen, insbesondere T-Profilen, aufgesetzt und dort mittels auf den Flanschen der T-Profilschienen befestigter Winkel gehalten und abgestützt. Darüber hinaus werden die begrünten Bauelemente über Splinte und/oder Klemmschienen gehalten, die auf die überstehenden Stegen der T-Profilschienen verankert bzw. aufgesetzt sind.

Als Tragkonstruktion kann in vorteilhafter Weise auch eine solche verwendet werden, die sich aus zwei steil gegeneinander gestellten Traggerüsten zusammensetzt, die zusammen von der Schmalseite her gesehen die Form eines A bilden. Zweckmäßigerweise sind bei dieser vorteilhaften Ausgestaltungsform die Träger an ihren oberen Ende sowie zumindest auch in ihren unteren Endbereichen in Querrichtung durch Verbindungsriegel ausgesteift.

Die erfindungsgemäß ausgestaltete Wand oder das erfindungsgemäß ausgestaltete Dach, insbesondere mit der Begrünung aus Sempervivum, besitzt ein schönes Aussehen. Darüber hinaus ist ein hoher ökologischer Nutzen vorhanden.

Die Begrünung ist wasserspeichernd sowie schall- und wärmeisolierend. Darüber hinaus ist die so begrünte Fläche sauerstoffproduzierend, da es sich um Assimilationsflächen handelt. Die Erfindung hat auch ökonomischen Wert: Es geht nicht so viel Energie verloren. Sie trägt dazu bei, daß Ausgleichsflächen eingespart werden können, die sonst als Ausgleich für die bebauten Flächen von Gemeinden ausgewiesen werden müssen. Aufgrund ihrer vorteilhaften soliden Beschaffenheit besitzt die erfindungsgemäß ausgeführte Wand oder das erfindungsgemäß ausgeführte Dach eine lange Lebensdauer.

Die Erfindung ist anhand der beigefügten, schematischen Zeichnungen bspw. noch näher erläutert. Es zeigt:
- Fig. 1: eine Draufsicht auf eine aus dem erfindungsgemäßen Bauelement herausgenommene, gitterartige Armierung,
- Fig. 2: die Schale des erfindungsgemäßen Bauelementes in Draufsicht ohne Füllung und Bepflanzung,
- Fig. 3: eine Ansicht der Schale gem. Fig. 2 von ihrer Längsseite her,
- Fig. 4: einen Teil-Querschnitt durch einen Mauerabschnitt mit montiertem, begrünten Bauelement mit Halterungen in Form von T-Profilen und aufgesetzten Klemmleisten (= Abdeckstücken) sowie mit Distanz-Stücken,
- Fig. 5: einen Teil-Querschnitt durch ein Flachdach mit montierten, begrünten Bauelementen ohne zusätzliche Halterungen und Distanzstücke,

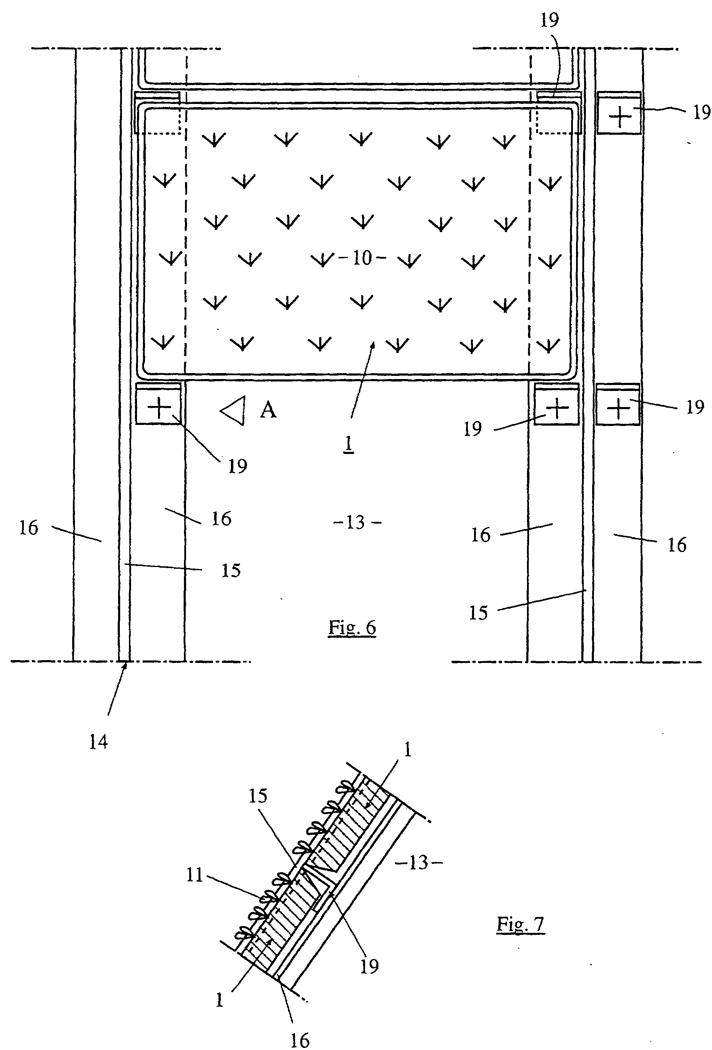

- Fig. 6: eine schematische Ansicht eines Ausschnittes aus einer stark geneigten Dachfläche mit zwei montierten Bauelementen mit Begrünung und mit Blick auf die T-Profile mit den Haltewinkeln und
- Fig. 7: eine schematische Teil-Schnittansicht durch ein Teilstück einer erfindungsgemäß begrünten, geneigten Dachfläche ohne Dachaufbau mit Blick auf eines der T-Profilstücke von der Seite her (Blickrichtung A) und auf einen auf dem Flansch des Profilstückes befestigten Winkels zur Abstützung des erfindungsgemäßen Bauelements.

Das Bauelement 1 besteht aus einer Substrat-Füllung 2, die von einer Schale 3, vorzugsweise aus Leichtmetall oder Kunststoff, aufgenommen ist.

Die Schale 3 weist in den Seitenwänden 4 Wasserablaufschlitze 5 auf, die sich bis in die benachbarten Bodenbereiche fortsetzen. Zusätzlich sind im Boden 6 der Schale 3 Wasserablauflöcher 7 angeordnet. Zur Erhöhung der Stabilität ist der Rand 8 der Schale 3 nach außen und unten gebogen.

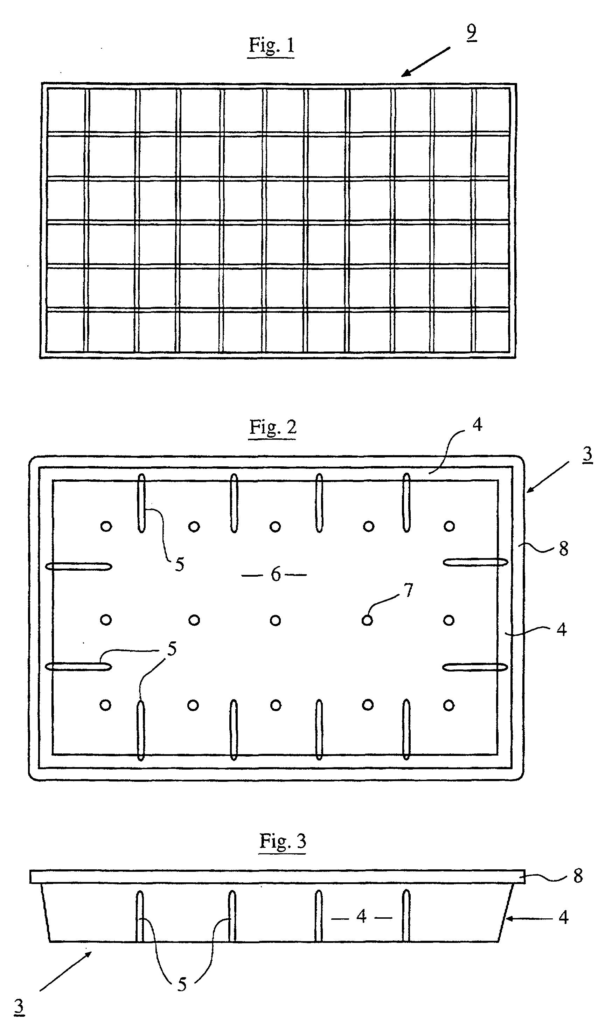

In der Substrat-Füllung 2 ist eine Armierung 9 aus stabilem Material (Holz, Kunststoff oder Metall), vorzugsweise in Gitterform, eingelassen (Fig. 1). Die Armierung 9 kann entweder im Rand der Schale 3 eingelassen oder bei der Herstellung mit eingeformt sein. Es ist auch möglich, diese separat auszuführen und bspw. mit einem gesonderten Zinkdraht am Boden 6 der Schale 3 zu befestigen, oder die Armierung kann auch in die Schale eingehängt sein (in der Zeichnung nicht dargestellt). Die im wesentlichen ebene Armierung 9 erstreckt sich parallel zur Sichtfläche 10 des Bauelementes 1. Sie kann aber auch auf der Oberfläche der Substrat-Füllung 2 aufliegen (nicht dargestellt). Als Maschenweite für die Gitteranordnung kann vorzugsweise eine solche von 6 x 6 cm vorgesehen sein.

Die Substrat-Füllung 2 besteht aus Glas- oder Steinwolle, die als Gewebe ausgebildet sein kann, aus Torf und Erde sowie aus einem Gemisch aus Mehl und Leim, das als Bindemittel dient oder einem sonstigen Bindemittel. Es können noch weitere Gewebe und Textilmaterialien eingebettet sein. Das Torf-Erde-Gemisch kann Samen oder Keimlinge, Dünger und Pflegemittel enthalten. Wesentlich ist, daß das ausgehärtete und wetterfeste Bindematerial nachgiebig bleibt, also durch das Eindringen von Wurzeln oder gefrierende, eingeschlossene Feuchtigkeit nicht zerbröselt. Der pH-Wert des Substrats beträgt 6 - 7,5.

Wenn die Armierung 9 in der Substrat-Füllung 2 vertieft angeordnet ist, so liegt sie etwa 2 - 3 cm unter der Sichtfläche 10 und dient den sich bildenden Wurzeln der Bepflanzung als Halt und Verankerung.

Die bevorzugte Bepflanzung für die Begrünung 11 besteht aus Sempervivum-Hybriden, die auch horizontal wachsen können und sehr genügsam und zäh sind. Es können aber auch Sedum-Pflanzen zur Begrünung 11 eingesetzt werden.

Das Bauelement 1 ist bevorzugt rechteckig und quadratisch. Das in den Zeichnungen dargestellte, rechteckförmige Ausführungsbeispiel hat die Abmessung von ca. 40 x 60 cm. Es können aber auch beliebig andere Sonderformen mit anderen Abmessungen hergestellt werden.

Die bevorzugte Dicke des Bauelementes beträgt etwa 6 cm, übersteigt aber vorzugsweise nicht 10 cm.

Vor der Montage der Bauelemente 1 werden an einer Fassaden- oder Dachwand 12 bzw. 13 abwärts laufende, zueinander parallele Stege 14 aufgebracht, die jeweils aus einem T-Profilstab gebildet sind, dessen beide von einem Ende des Mittelsteges 15 abstehenden Flansche 16 mittels einer Dübelbefestigung 17 an der Wand 12 befestigt sind. Bei einer Dachfläche 13 können die Flansche 16 an Dachlatten o.dgl. befestigt werden. An der Wand 12 werden außerdem Distanzstücke 18 aufgebracht, die vorzugsweise zwischen den Flanschen 16 und der Oberfläche der Wand 12 angeordnet und mittels der Dübelbefestigung 17 befestigt sein können. Der Abstand der Stege 15 darf nicht geringer sein als die Länge der Bauelemente und muß diesen ungefähr entsprechen.

Jedes Bauelement 1 setzt sich mit seiner nach Einbau unteren, langen Seitenwand 4 auf Winkel- oder Winkelstücke 19 auf, die paarweise und in der passenden, gleichen Höhe auf den Flanschen 16 der Profilstäbe 14 befestigt sind. Diese weisen in Richtung der Fall-Linie gesehen keinen geringeren Abstand voneinander auf, als die Breite der Bauelemente 1 beträgt, so daß die Bauelemente 1 auch mit ihren Längsseiten dicht an dicht nach Anordnung aneinander anliegen.

Nach Anordnen der Bauelemente 1 zwischen den Profilstäben 14 dicht an dicht werden die Abdeckstücke 20 über die wandfernen Enden der Stege 14 geschoben, und Stifte oder Splinte 21 werden durch Bohrungen hindurchgeführt, die fluchtend die Stege 14 und die Abdeckstücke 20 durchsetzen (Fig. 4). Die Abdeckstücke 20 können auch als Klemmprofile ausgebildet sein, so daß eine Sicherung der Verbindung durch Splinte oder Stifte entbehrlich ist.

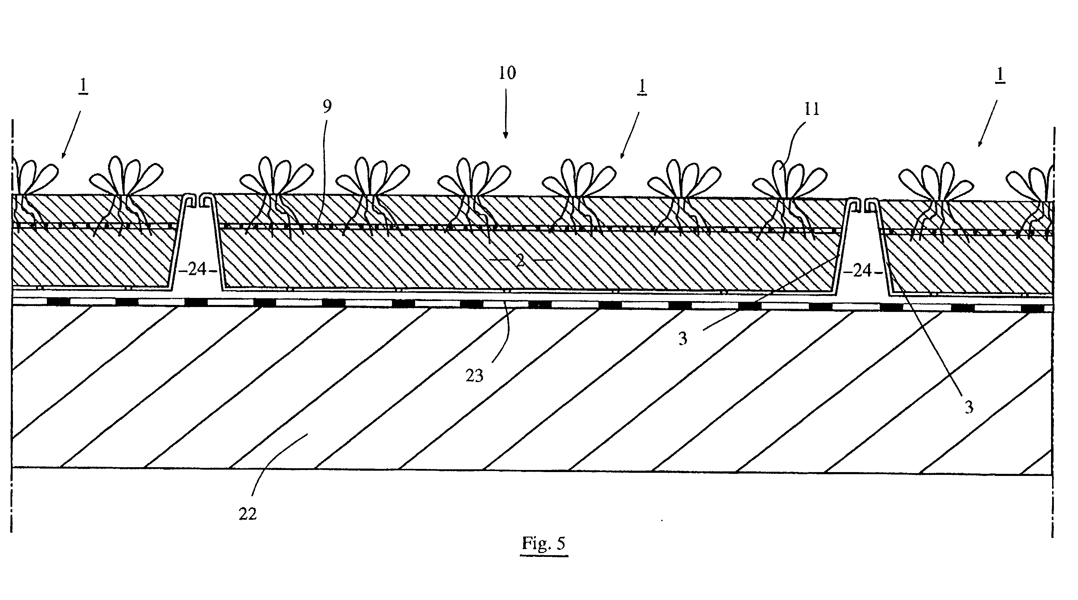

In Fig. 5 ist die Begrünung eines Flachdaches 22 mittels der erfindungsgemäßen Bauelemente 1 dargestellt. Bei dieser Anordnung sind weder Profilstäbe noch Abdeckstücke oder Distanzstücke erforderlich. Die Bauelemente 1 sind dicht an dicht auf dem Flachdach 22 angeordnet.

Zur Abdichtung des Flachdaches dient eine wasser- und wurzelfeste Folie 23. Zwischen den benachbarten Bauelementen 1 sind aufgrund der konisch zulaufenden Form der Schalen 3 der Bauelemente 1 nach unten hin sich vergrößernde, offene Hohlräume 24 gebildet, die untereinander nach Art eines Drainagesystems verbunden sind. Auf diese Weise kann das Regenwasser ungehindert in den Dacheinlauf gelangen.

Die Erfindung ist nicht auf das dargestellte und beschriebene Ausführungsbeispiel beschränkt. Vielmehr stellt dieses nur eine besonders vorteilhafte Ausführungsform des Erfindungsgedankens dar.

## Patentansprüche

1. Bauelement (1) zur Erstellung begrünter Wand- und Dachflächen, bestehend aus einer Wand- oder Dachplatte aus einer nachgiebigen Substrat-Füllung (2), die aus Stein- und/oder Glaswolle, Torf-Erde-Gemisch und einem Bindemittel besteht, sowie aus einer Armierung (9) in Form einer gitterartigen Grundstruktur gebildet ist und deren Sichtfläche (10) begrünbar oder begrünt ist,
**dadurch gekennzeichnet,**
**daß** die Wand- oder Dachplatte (2 und 9) in einer Schale (3) oder einem Kasten aufgenommen ist, die bzw. der die Wand- oder Dachplatte rückseitig und wandseitig einfaßt.

2. Bauelement nach Anspruch 1,
**dadurch gekennzeichnet,**
**daß** die Schale (3) oder der Kasten aus stabilem, nicht rostenden Material, vorzugsweise Metall oder Kunststoff, gebildet ist.

3. Bauelement nach Anspruch 1 - 2,
**dadurch gekennzeichnet,**
**daß** die Armierung (9) zur Verankerung der Begrünung (11) im Bereich der Pflanzenwurzeln angeordnet ist.

4. Bauelement nach Anspruch 3,
**dadurch gekennzeichnet,**
**daß** die Armierung (9) aus stabilem Holz, Kunststoff und/oder Metall besteht.

5. Bauelement nach einem der Ansprüche 3 oder 4,
**dadurch gekennzeichnet,**
**daß** sich die Armierung (9) parallel zur Sichtfläche (10) erstreckt und zu dieser einen Abstand von etwa 2 - 3 cm hat.

6. Bauelement nach einem der Ansprüche 3 - 5,
**dadurch gekennzeichnet,**
**daß** die Armierung (9) die Sichtfläche (10) der Wand- oder Dachplatte überspannt und/oder auf dieser aufliegt.

7. Bauelement nach Anspruch 3 - 6,
**dadurch gekennzeichnet,**
**daß** die Armierung (9) an der Schale (3), oder am Kasten mittels Draht fixiert ist.

8. Bauelement nach einem der Ansprüche 3 - 7,
**dadurch gekennzeichnet,**
**daß** die Armierung (9) fest mit der Wandung (4) der Schale (3) verbunden ist.

9. Bauelement nach einem der Ansprüche 1 bis 8,
**dadurch gekennzeichnet,**
**daß** in den Seitenwänden (4) der Schale (3) vertikal zum Boden (6) verlaufende Wasserablaufschlitze (5) angeordnet sind.

10. Bauelement nach Anspruch 9,
**dadurch gekennzeichnet,**
**daß** sich die Wasserablaufschlitze (5) bis in den randseitigen Bodenbereich (6) der Schale (3) oder des Kastens hinein fortsetzen.

11. Bauelement nach einem der Ansprüche 1 - 10,
**dadurch gekennzeichnet,**
**daß** im Boden (6) der Schale (3) Wasserablauflöcher (7) angeordnet sind.

12. Bauelement nach einem der Ansprüche 1 -11,
**dadurch gekennzeichnet,**
**daß** die Schale (3) die Form eines flachen, zum Boden hin konisch sich verjüngenden Troges oder Behälters aufweist und die darin aufgenommene Substratfüllung (2) der Wand- oder Dachplatte an den Aufnahmeraum angepaßt ist und ihre Sichtfläche (10) vorzugsweise eine ebene Oberfläche aufweist.

13. Bauelement nach einem der Ansprüche 1 - 12,
**dadurch gekennzeichnet,**
**daß** der Rand (8) der Schale (3) nach außen umgebogen ist.

14. Bauelement nach einem der Ansprüche 1 - 13,
**dadurch gekennzeichnet,**
**daß** die Schale (3) mit der darin aufgenommenen Wand- oder Dachplatte etwa 6 cm dick ist.

15. Bauelement nach einem der Ansprüche 1- 14,
**dadurch gekennzeichnet,**
**daß** die Schale (3) etwa 30 cm breit und etwa 60 cm lang ist.

16. Bauelement nach einem der Ansprüche 1 - 15,
**dadurch gekennzeichnet,**
**daß** die Begrünung (11) aus Sempervivum Hybriden besteht.

17. Bauelement nach einem der Ansprüche 1 - 15,
**dadurch gekennzeichnet,**
**daß** die Begrünung (11) aus Sedum-Pflanzen besteht.

18. Wand- oder Dachabschnitt mit einer Wand- oder Dachfläche, an der mindestens eines der Bauelemente (1) nach einem der Ansprüche 1 - 17 angebracht ist,
**dadurch gekennzeichnet,**
**daß** Halterungen (14) an der Wand- oder geneigten Dachfläche angebracht sind, die jedes Bauelement (1) an den gegenüberliegenden Seiten einfassen.

19. Wand- oder Dachabschnitt nach Anspruch 18,
**dadurch gekennzeichnet,**
**daß** an der Wand- oder Dachfläche Distanzstücke (18) angebracht sind, die einen Abstand zwischen der Wand- oder Dachfläche und der zugewandten Fläche des Bauelementes (1) festlegen.

20. Wand- oder Dachabschnitt nach einem der Ansprüche 18 - 19,
**dadurch gekennzeichnet,**
**daß** die Halterungen als sich vertikal oder sich in Fall-Linie erstreckende Stege (14) ausgebildet sind, die bevorzugt aus einem T-Profilstab gebildet sind und an denen die Seitenkanten der Bauelemente (1) anliegen.

21. Wand- und Dachabschnitt nach einem der Ansprüche 18 - 20,
**dadurch gekennzeichnet,**
**daß** die Bauelemente (1) an ihren unteren, horizontal verlaufenden Wandseiten (4) im Randbereich auf den freien Schenkeln von Winkeln (19) aufgesetzt sind, deren anderer Schenkel auf den wandseitig angeordneten Flanschen (16) der T-Profilstäbe (14) aufliegen und befestigt sind.

22. Wand- oder Dachabschnitt nach Anspruch 21,
**dadurch gekennzeichnet,**
**daß** auf den Stegen (15) der T-Profilstäbe (14) Abdeckstücke (20) aufgesetzt und mittels Stiften oder Splinten (21) gesichert sind, die gegen die Sichtfläche (10) der Bauelemente (1) zu deren Befestigung anliegen.

23. Wand- oder Dachabschnitt nach einem der Ansprüche 18 - 22,
**dadurch gekennzeichnet,**
**daß** die bei geneigten Dachflächen firstseitig sich treffenden Profilstäbe (14) miteinander verbunden sind.

24. Wand- oder Dachabschnitt nach einem der Ansprüche 18 - 23,
**dadurch gekennzeichnet,**
**daß** die bei geneigten Dachflächen im Bereich der Traufe endenden und auf das Randeinfassungsprofil des Daches stoßenden Profilstäbe (14) über Winkelprofile mit diesen verbunden sind.

25. Dachabschnitt mit einer Dachfläche geringer Neigung, auf der mindestens eines der Bauelemente (1) nach einem der Ansprüche 1 - 17 angebracht ist,
**dadurch gekennzeichnet,**
**daß** bei Aneinandersetzen der Bauelemente (1) zwischen zwei benachbarten Bauelementen (1) im unteren Teil der Seitenwände (4) derselben nach unten offene Hohlräume (24) gebildet sind, die untereinander nach Art eines Drainagesystems miteinander verbunden sind.

26. Schallschutzwand aus einem gitterartigen, tragenden Rahmen, in dessen Öffnungen mindestens zwei Bauelemente (1) nach einem der Ansprüche 1-17 paarweise mit ihren rückseitigen Wandungen, d.h. Boden (6), einander zugewandt sind und deren Sichtflächen (10) einander gegenüber liegen.

## Claims

1. Structural element (1) adapted to provide greened and/or planted wall and roof surfaces comprising a wall or roof slab made of a flexible substrate fill (2) which is formed of rockwool and/or glasswool, a peat-soil mix and a bonding agent as well as a reinforcement (9) having a grid-type basic structure, said substrate fill having a visible surface which can be greened or is greened,
**characterized by** the fact
that the wall or roof slab (2 and 9) is accommodated in a shell (3) or a box encompassing the rear and the wall side of said wall or roof slab.

2. Structural element according to Claim 1,
**characterized by** the fact
that the shell (3) or the box consists of a stable, stainless material, preferably metal or plastic.

3. Structural element according to Claims 1 and 2,
**characterized by** the fact
that the reinforcement (9) is disposed in the plant roots area to anchor the greenery (11).

4. Structural element according to Claim 3,
**characterized by** the fact
that the reinforcement (9) consists of stable wood, plastic and/or metal.

5. Structural element according to at least one of the Claims 3 or 4,
**characterized by** the fact
that the reinforcement (9) extends parallel to the visible surface (10) and is spaced therefrom by about 2 to 3 cm.

6. Structural element according to at least one of the Claims 3 or 5,
**characterized by** the fact
that the reinforcement (9) extends above and/or is disposed on the visible surface (10) of the wall or roof slab.

7. Structural element according to at least one of the Claims 3 to 6,
**characterized by** the fact
that the reinforcement (9) is fixed to the shell (3) or to the box by means of wire or such like.

8. Structural element according to at least one of the Claims 3 to 7,
**characterized by** the fact
that the reinforcement (9) is durably connected to the wall (4) of the shell (3).

9. Structural element according to one of the Claims 1 to 8,
**characterized by** the fact
that water drain slots (5) extending vertically to the bottom (6) are provided in the sidewalls (4) of the shell (3).

10. Structural element according to Claim 9,
**characterized by** th fact
that the water drain slots (5) extend right down to the marginal bottom area (6) of the shell (3) or the box.

11. Structural element according to at least one of the Claims 1 to 10,
**characterized by** the fact
that water drain holes (7) are provided in the bottom (6) of the shell (3).

12. Structural element according to at least one of the Claims 1 to 11,
**characterized by** the fact
that the shell (3) is in the form of a shallow and toward the bottom converging trough or container, that the substrate fill (2) therein contained of the wall or roof slab is adapted in volume to the capacity of the accommodating space, and that the visible surface (10) thereof is preferably even.

13. Structural element according to at least one of the Claims 1 to 12,
**characterized by** the fact
that the marginal edge (8) of the shell (3) is bent over outwardly.

14. Structural element according to one of the Claims 1 to 13,
**characterized by** the fact
that the shell (3) with wall or roof slab is about 6 cm thick.

15. Structural element according to one of the Claims 1 to 14,
**characterized by** the fact
that the shell (3) is about 30 cm wide and about 60 cm long.

16. Structural element according to one of the Claims 1 to 15,
**characterized by** the fact
that the greenery (11) consists of sempervivum hybrides.

17. Structural element according to one of the Claims 1 to 15,
**characterized by** the fact
that the greenery (11) consists of sedum plants.

18. Wall or roof section having a wall or roof area to which at least one of the structural elements (1) according to one the Claims 1 to 17 is attached,
**characterized by** th fact
that holders 14 are attached to the wall or the sloping roof surface and encompass each structural element (1) at opposite sides.

19. Wall or roof section according to Claim 18,
**characterized by** the fact
that spacers (18) are attached to the wall or roof surface which define a spacing between said wall or roof surface and the facing surface of the structural element (1).

20. Wall or roof section according to one of the Claims 18 to 19,
**characterized by** the fact
that the holders are provided in the form of webs (14) extending vertically or along the slope line, preferably consist of a Tee section bar and engage the lateral edges of the structural elements (1).

21. Wall or roof section according to at least one of the Claims 18 to 20,
**characterized by** the fact
that the structural elements (1) are by their marginal bottom horizontal wall sides (4) seated on the free legs of angles (19) whose other legs are seated on the wall-side flanges (16) of said Tee sections (14) and secured thereto.

22. Wall or roof section according to Claim 21,
**characterized by** the fact
that cover members (20) are fitted to the webs (15) of the Tee sections (14) and secured by means of pins or cotters (21) engaging the visible surface (10) of the structural elements (1) for fixing them.

23. Wall or roof section according to one of the Claims 18 to 22,
**characterized by** the fact
that in case of sloping roof surfaces the sections (14) mating on the ridge side are connecvted to each other.

24. Wall and roof surface according to one of the Claims 18 to 23,
**characterized by** th fact
that in case of sloping roofs the sections (14) terminateing in the eaves area and abutting the skirt section of the roof are connected thereto by means of angle sections.

25. Roof section with a minor-slope roof surface on which at least one of the structural elements (1) according to one of the Claims 1 to 17 is arranged,
**characterized by** the fact
that when joining structural elements (1) there are downwardly open cavities (24) formed between any two adjacent elements (1) in the lower portion of the sidewalls (4) thereof and that said cavities are interconnected the way as customary to provide a drainage system.

26. Noise barrier wall comprising a grid type supporting frame in the openings of which at least two structural elements (1) according to one of the Claims 1 to 17 are in pairs facing each other by their rear walls, i.e. bottoms (6), such that their visible surfaces (10) are facing away from each other.

## Revendications

1. Élément de construction (1) pour réaliser des surfaces murales ou de toit garnies de verdure, composé d'une plaque murale ou de toit contenant un substrat souple (2) composé de laine de verre et/ou de roche, d'un mélange de terreau et de terre et d'un liant, ainsi que d'une armature (9) ayant la forme d'une structure de base semblable à un treillis et dont la surface visible (10) est ou peut être garnie de verdure, **caractérisé en ce que** la plaque murale ou de toit (2 et 9)est logée dans une coupe (3) ou un caisson qui borde la plaque murale ou de toit à l'arrière et au niveau des parois latérales.

2. Élément de construction selon la revendication 1, **caractérisé en ce que** la coupe (3) ou le caisson est constitué(e) par un matériau résistant inoxydable, de préférence du métal ou de la matière plastique.

3. Élément de construction selon la revendication 1 - 2, **caractérisé en ce que** l'armature (9) pour ancrer la verdure (11) est située au voisinage des racines des plantes.

4. Élément de construction selon la revendication 3, **caractérisé en ce que** l'armature (9) est composée de bois, de matière plastique et/ou de métal résistant(e).

5. Élément de construction selon la revendication 3 ou 4, **caractérisé en ce que** l'armature (9) s'étend parallèlement à la surface visible (10) et présente un écart d'environ 2 à 3 cm par rapport à celle-ci.

6. Élément de construction selon l'une des revendications 3 - 5, **caractérisé en ce que** l'armature (9) est tendue par-dessus la surface visible (10) de la plaque murale ou de toit et/ou repose sur celle-ci.

7. Élément de construction selon la revendication 3 - 6, **caractérisé en ce que** l'armature (9) est fixée à la coupe (3) ou au caisson au moyen de fil de fer.

8. Élément de construction selon l'une des revendications 3 - 7, **caractérisé en ce que** l'armature (9) est reliée fixement à la paroi (4) de la coupe (3).

9. Élément de construction selon l'une des revendications 1 à 8, **caractérisé en ce que** des fentes d'écoulement pour l'eau (5) s'étendant verticalement par rapport au sol (6) sont disposées dans les parois latérales (4) de la coupe (3).

10. Élément de construction selon la revendication 9, **caractérisé en ce que** les fentes d'écoulement pour l'eau (5) se prolongent jusque dans la zone du fond (6) de la coupe (3) ou du caisson qui est située à proximité du bord.

11. Élément de construction selon l'une des revendications 1 - 10, **caractérisé en ce que** des trous pour l'écoulement de l'eau (7) sont disposés dans le fond (6) de la coupe (3).

12. Élément de construction selon l'une des revendications 1 - 11, **caractérisé en ce que** la coupe (3) a la forme d'une auge ou d'un récipient plat se rétrécissant de façon conique vers le fond, **en ce que** le substrat (2) contenu dans la plaque murale ou de toit est adapté au réceptacle, et **en ce que** sa surface visible (10) présente de préférence une surface plane.

13. Élément de construction selon l'une des revendications 1 - 12, **caractérisé en ce que** le bord (8) de la coupe (3) est recourbé vers l'extérieur.

14. Élément de construction selon l'une des revendications 1 - 13, **caractérisé en ce que** la coupe (3) avec la plaque murale ou de toit qu'elle contient mesure environ 6 cm d'épaisseur.

15. Élément de construction selon l'une des revendications 1 - 14, **caractérisé en ce que** la coupe (3) mesure environ 30 cm de large et environ 60 cm de long.

16. Élément de construction selon l'une des revendications 1 - 15, **caractérisé en ce que** la verdure (11) est constituée d'hybrides de sempervivum.

17. Élément de construction selon l'une des revendications 1 - 15, **caractérisé en ce que** la verdure (11) est constituée de sedum.

18. Pan de mur ou de toit comprenant une surface murale ou de toit sur laquelle est fixé au moins un élément de construction (1) selon l'une des revendications 1 - 17, **caractérisé en ce que** des dispositifs de fixation (14) sont fixés sur les surfaces murales ou les surfaces de toit inclinées, qui bordent chaque élément de construction sur les côtés opposés.

19. Pan de mur ou de toit selon la revendication 18, **caractérisé en ce que** des éléments d'écartement (18) sont fixés sur la surface murale ou de toit, qui déterminent un écart entre la surface murale ou de toit et la surface de l'élément de construction (1) qui est tournée vers cette dernière.

20. Pan de mur ou de toit selon la revendication 18 ou 19, **caractérisé en ce que** les dispositifs de fixation sont réalisés en tant qu'ailes verticales (14) s'étendant verticalement ou en ligne de chute, qui sont de préférence formées par un profilé en T et contre lesquelles sont appliquées les arêtes latérales des éléments de construction (1).

21. Pan de mur ou de toit selon l'une des revendications 18 - 20, **caractérisé en ce que** les éléments de construction (1) reposent avec le bord de leurs parois latérales inférieures s'étendant horizontalement (4) sur les ailes libres de cornières (19) dont les autres ailes reposent et sont fixées sur les ailes (16) situées côté mur des profilés en T (14).

22. Pan de mur ou de toit selon la revendication 21, **caractérisé en ce que** des pièces de recouvrement (20) sont posées sur les ailes (15) des profilés en T (14) et sont fixées au moyen de chevilles ou de goupilles (21) qui sont appliquées contre la surface visible (10) des éléments de construction (1) pour fixer ces derniers.

23. Pan de mur ou de toit selon l'une des revendications 18 - 22, **caractérisé en ce que**, dans le cas de surfaces de toit inclinées, les profilés (14) se touchant du côté du faîte sont reliés entre eux.

24. Pan de mur ou de toit selon l'une des revendications 18 - 23, **caractérisé en ce que**, dans le cas de surfaces de toit inclinées, les profilés (14) se terminant au niveau de la gouttière et touchant le profilé de bordage du toit sont reliés à ceux-ci par des cornières.

25. Pan de toit avec une surface de toit faiblement inclinée sur laquelle est fixé au moins l'un des éléments de construction (1) selon l'une des revendications 1 - 17, **caractérisé en ce que**, dans le cas d'éléments de construction (1) juxtaposés, des cavités ouvertes vers le bas (24) sont formées entre deux éléments de construction adjacents (1), dans la partie inférieure des parois latérales (4) de ceux-ci, qui communiquent entre elles à la manière d'un réseau de drainage.

26. Mur anti-bruit composé d'un cadre porteur semblable à un treillis, dans les ouvertures duquel au moins deux éléments de construction (1) selon l'une des revendications 1 - 17 sont tournés l'un vers l'autre avec leurs parois arrière, c'est-à-dire leurs fonds (6), et dont les surfaces visibles (10) sont opposées l'une à l'autre.
